# EUROPEAN PATENT APPLICATION

(11) **EP 3 425 785 A1**
(43) Date of publication of application: **09.01.2019**
(21) Application number: 16892544.4
(22) Date of filing: 02.03.2016
(51) Int. Cl.: H02M 3/28, H02M 3/155, B60L 1/00

(54) **POWER CONVERSION DEVICE**

(71) Applicant: Kabushiki Kaisha Toshiba, Minato-ku Tokyo 105-8001 (JP); Toshiba Infrastructure Systems & Solutions Corporation, Kawasaki-shi, Kanagawa 212-0013 (JP)
(72) Inventor: KAWAMURA, Koki, Tokyo 105-8001 (JP)
(74) Representative: AWA Sweden AB
(86) International application number: PCT/JP2016/056460
(87) International publication number: WO 2017/149702

(57) **Abstract**

Power conversion devices have complex configuration. A power conversion device includes a primary circuit, a secondary circuit, and a transformer. The primary circuit converts DC power into AC power for output. The secondary circuit converts AC power into DC power. The transformer electrically isolates the primary circuit and the secondary circuit, transforms a voltage of the AC power output by the primary circuit, and outputs the resultant AC power to the secondary circuit. The secondary circuit includes a first capacitor, a second capacitor, a resistor, and a diode. The first capacitor removes ripple components of the DC power converted from the AC power. The second capacitor has larger electrostatic capacity than the first capacitor, is connected in parallel to the first capacitor, and is charged with the DC power converted from the AC power. The resistor is connected in series to the second capacitor. The diode is connected in series to the second capacitor and in parallel to the resistor, and discharges the power charged by the second capacitor.

## Description

### FIELD

The embodiments relate generally to a power conversion device.

### BACKGROUND

Power conversion devices, for example, for trains are known. Such a power conversion device includes a primary circuit that converts received DC power into AC power, a secondary circuit that receives the AC power from the primary circuit and converts it into DC power, and a transformer that electrically isolates the primary circuit and the secondary circuit and transforms and transmits the AC power.

Such a power conversion device includes, in the primary circuit, a reactor and a filter capacitor for removing ripple components. The power conversion device further includes, in the primary circuit, a compensation capacitor for compensation that supplies power, in the case of power failure caused by stop of power supply from outside such as overhead wires, if charged power in the filter capacitor is insufficient.

### CITATION LIST

### Patent Literature

Japanese Patent Application Laid-open No. 2008-154341

### SUMMARY OF THE INVENTION

Problem to be Solved by the Invention

However, the above-described power conversion device removes ripple components with a certain frequency through the reactor and the filter capacitor, and supplies power from the compensation capacitor during power failure. Because of this, both the capacitors require larger electrostatic capacity as well as require a resistor and a contactor for inhibiting a rush current in the initial charging. This complicates the configuration and structure of the power conversion device.

In view of the above, the embodiments aim to provide a power conversion device which can be simplified in configuration and structure.

### Means for Solving Problem

A power conversion device according to an embodiment includes a primary circuit, a secondary circuit, and a transformer. The primary circuit converts DC power into AC power for output. The secondary circuit converts AC power into DC power. The transformer electrically isolates the primary circuit and the secondary circuit, transforms a voltage of the AC power output by the primary circuit, and outputs the resultant AC power to the secondary circuit. The secondary circuit includes a first capacitor, a second capacitor, a resistor, and a diode. The first capacitor removes ripple components of the DC power converted from the AC power. The second capacitor has larger electrostatic capacity than the first capacitor, is connected in parallel to the first capacitor, and is charged with the DC power converted from the AC power. The resistor is connected in series to the second capacitor. The diode is connected in series to the second capacitor and in parallel to the resistor, and discharges the power charged by the second capacitor.

### BRIEF DESCRIPTION OF DRAWINGS

FIG. 1 is a block diagram of a power conversion device according to a first embodiment.
FIG. 2 is a block diagram of a power conversion device according to a second embodiment.

### DETAILED DESCRIPTION

The following exemplary embodiments and modifications include same or like elements. The same or like elements will be denoted by common reference numerals and repeated explanation will be partially omitted. Parts of one embodiment or modification can be replaced by the corresponding parts of another embodiment or modification. Moreover, the configurations, positions, and others of the parts of one embodiment or modification are the same as those in another embodiment or modification, unless otherwise mentioned.

The following embodiments and modifications illustrate power conversion devices for electric vehicles. However, the power conversion devices of the embodiments are not limited thereto.

### <First Embodiment>

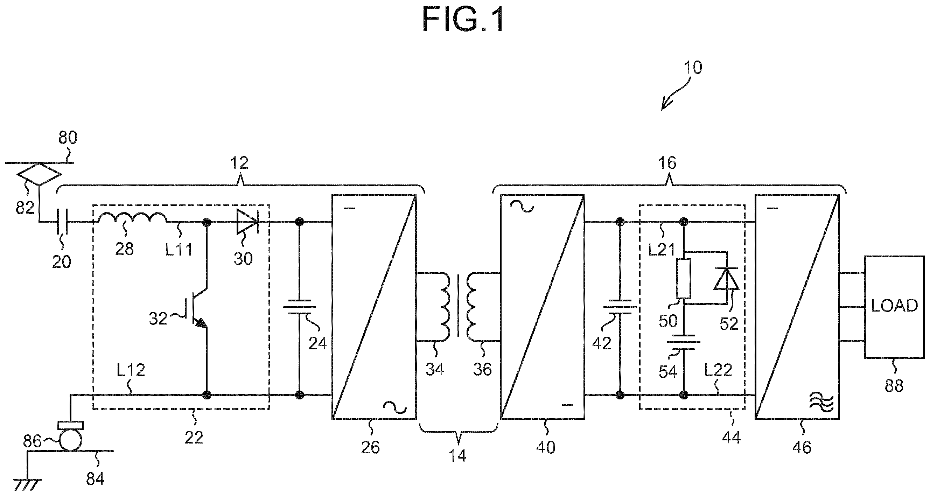

FIG. 1 is a block diagram of a power conversion device 10 according to a first embodiment. The power conversion device 10 of the first embodiment is for electric vehicles, for example. As illustrated in FIG. 1, the power conversion device 10 is provided between a current collector 82 such as a pantograph to which DC power is supplied from a DC overhead wire (DC power feeder) 80 and a wheel 86 placed through a track 84.

The power conversion device 10 includes a primary circuit 12, a high-frequency transformer 14 that is an example of a transformer, and a secondary circuit 16.

The primary circuit 12 is provided in a stage following the current collector 82 and the wheel 86 and preceding the high-frequency transformer 14. The primary circuit 12 receives AC power from the current collector 82 and the wheel 86, converts it into DC power, and outputs the DC power to the high-frequency transformer 14.

The primary circuit 12 includes a release contactor 20, a boosting chopper 22 that is an example of a booster, a first filter capacitor 24 that is an example of a filter, and a high-frequency inverter 26. The primary circuit 12 includes one wiring L11 (e.g., wiring on the positive electrode side) and the other wiring L12 (e.g., wiring on the negative electrode side) from the release contactor 20 to the high-frequency inverter 26.

The release contactor 20 is a contactor (or a breaker), and is connected in series to the wiring L11 in a stage following the current collector 82. The release contactor 20 connects and disconnects a path between the current collector 82 and the primary circuit 12, that is, switches between on and off.

The boosting chopper 22 is connected in series to the output stage of the release contactor 20. The boosting chopper 22 is connected between the wiring L11 and the wiring L12. The boosting chopper 22 receives DC input power through the current collector 82 and boosts the voltage thereof. The boosting chopper 22 removes low-frequency ripple components. One example of the boosting chopper 22 is a non-insulated boosting choke converter. The boosting chopper 22 includes a reactor 28, a backflow prevention diode 30, and a switching element 32.

The reactor 28 is connected in series to the wiring L11 in a stage following the release contactor 20. The backflow prevention diode 30 is connected in series to the wiring L11 in a stage following the reactor 28. The backflow prevention diode 30 is connected to the wiring 11 such that current flows forward from the reactor 28 to the high-frequency inverter 26. That is, the anode of the backflow prevention diode 30 is connected to the reactor 28, and the cathode thereof is connected to the high-frequency inverter 26. The switching element 32 is connected in a stage following the reactor 28 and preceding the backflow prevention diode 30 between the wiring L11 and the wiring L12. The switching element 32 receives control signals corresponding to a switching frequency and on-duty. The switching element 32 switches between on and off on the basis of the control signals for chopping operation. In this manner, the boosting chopper 22 boosts and outputs DC input power.

The first filter capacitor 24 is connected in a stage following the boosting chopper 22. The first filter capacitor 24 is connected between the wiring L11 and the wiring L12. The first filter capacitor 24 removes (that is, filters) ripple components from the DC power boosted by the boosting chopper 22, and outputs the DC power to the high-frequency inverter 26. The first filter capacitor 24 may remove the ripple components in cooperation with the reactor 28.

The high-frequency inverter 26 is connected in a stage following the boosting chopper 22 and the first filter capacitor 24. The high-frequency inverter 26 is connected between the wiring L11 and the wiring L12. The high-frequency inverter 26 converts the boosted DC power with the ripple components removed into AC power, and outputs the AC power to the high-frequency transformer 14. For example, the high-frequency inverter 26 outputs AC power having a frequency n times (n is an integral number equal to or larger than 2) higher than that of a commercial power source (50 Hz or 60 Hz).

The high-frequency transformer 14 is connected in a stage following the high-frequency inverter 26 of the primary circuit 12. The high-frequency transformer 14 includes a primary winding 34 and a secondary winding 36. The primary winding 34 is connected to the high-frequency inverter 26 of the primary circuit 12. The secondary winding 36 is connected to the secondary circuit 16. The high-frequency transformer 14 converts the voltage of the AC power, output from the high-frequency inverter 26 of the primary circuit 12, at a boosting ratio corresponding to the winding ratio of the primary winding 34 and the secondary winding 36, and outputs the resultant AC power to the secondary circuit 16. In the high-frequency transformer 14, the primary winding 34 is electrically isolated from the secondary winding 36. Thus, the high-frequency transformer 14 electrically isolates the primary circuit 12 connected to the primary winding 34 from the secondary circuit 16 connected to the secondary winding 36.

The secondary circuit 16 is connected in a stage following the high-frequency transformer 14. The secondary circuit 16 converts AC power into DC power and then into three-phase AC power and outputs the three-phase AC power to a load 88. The secondary circuit 16 includes a rectifier 40, a second filter capacitor 42 that is an example of a first capacitor, a compensator 44, and a three-phase inverter 46 that is an example of a second inverter. The secondary circuit 16 includes one wiring L21 (e.g., wiring on the positive electrode side) and the other wiring L22 (e.g., wiring on the negative electrode side) from the rectifier 40 to the three-phase inverter 46.

The rectifier 40 is connected in a stage following the high-frequency transformer 14. The rectifier 40 includes a plurality of diodes, for example. The rectifier 40 converts high-frequency AC power transformed by the high-frequency transformer 14 into DC power, and outputs it to the second filter capacitor 42.

The second filter capacitor 42 is connected in a stage following the rectifier 40. The second filter capacitor 42 is connected between the wiring L21 and the wiring L22. The second filter capacitor 42 removes (that is, filters) ripple components with a certain frequency (e.g., 20 kHz or higher) from the DC power converted from the AC power by the rectifier 40, and outputs the DC power. The second filter capacitor 42 only needs to remove high-frequency ripple components, therefore, its electrostatic capacity is set to smaller than the capacity for removing low-frequency ripples included in the DC overhead wire 80.

The compensator 44 is connected in a stage following the rectifier 40 and the second filter capacitor 42. The compensator 44 is connected between the wiring L21 and the wiring L22. The compensator 44 is connected in parallel to the second filter capacitor 42. The compensator 44 includes a charging resistor 50 that is an example of a resistor, a discharge diode 52 that is an example of a diode, and a contact-loss compensation capacitor 54 that is an example of a second capacitor.

The charging resistor 50 is connected in series to the contact-loss compensation capacitor 54. The charging resistor 50 and the contact-loss compensation capacitor 54 are connected between the wiring L21 and the wiring L22. That is, the charging resistor 50 and the contact-loss compensation capacitor 54 are connected in parallel to the second filter capacitor 42. The discharge diode 52 is connected in series to the contact-loss compensation capacitor 54. The discharge diode 52 and the contact-loss compensation capacitor 54 are connected between the wiring L21 and the wiring L22. That is, the discharge diode 52 and the contact-loss compensation capacitor 54 are connected in parallel to the second filter capacitor 42. The discharge diode 52 is connected in parallel to the charging resistor 50. In the first embodiment, no resistor is provided between the rectifier 40 and the second filter capacitor 42. Thus, the resistance between the rectifier 40 and the second filter capacitor 42 is smaller than the resistance of the charging resistor 50. With a resistor provided between the rectifier 40 and the second filter capacitor 42, it is still preferable to set the resistance of the resistor to smaller than the resistance of the charging resistor 50.

The charging resistor 50 charges the contact-loss compensation capacitor 54 with part of the DC power converted by the rectifier 40.

The discharge diode 52 is connected such that current flows forward from the wiring L22 to the wiring L21. That is, the anode of the discharge diode 52 is connected to the contact-loss compensation capacitor 54 and the wiring L22, and the cathode thereof is connected to the wiring L21. The discharge diode 52 discharges the charged power from the contact-loss compensation capacitor 54.

The contact-loss compensation capacitor 54 is an electrolytic capacitor. The contact-loss compensation capacitor 54 is charged with the DC power converted from the AC power by the rectifier 40. At the time of instantaneous power failure being instantaneous stop of power supply due to separation of the current collector 82 from the DC overhead wire 80, the contact-loss compensation capacitor 54 uses the charged power for continuation of the power supply. The electrostatic capacity of the contact-loss compensation capacitor 54 is larger than the electrostatic capacity of the second filter capacitor 42. For example, the electrostatic capacity (e.g., 10,000 µF) of the contact-loss compensation capacitor 54 is 10 times or larger than the electrostatic capacity (e.g., 100 µF) of the second filter capacitor 42.

The three-phase inverter 46 is connected in a stage following the second filter capacitor 42 and the compensator 44. The three-phase inverter 46 is connected between the wiring L21 and the wiring L22. The three-phase inverter 46 converts the DC power filtered by the second filter capacitor 42 into high-voltage (e.g., 440 V), three-phase AC having a lower frequency than a frequency of the AC power output by the high-frequency inverter 26. An exemplary frequency of the three-phase AC output by the three-phase inverter 46 is the frequency of a commercial power source. The three-phase inverter 46 outputs the converted three-phase AC to the load 88 such as an air conditioner and a motor-driven air compressor.

The following will describe the operation of the power conversion device 10.

While the current collector 82, connected to the release contactor 20, is in contact with the DC overhead wire 80, the DC overhead wire 80 supplies DC power to the power conversion device 10. In the power conversion device 10, the boosting chopper 22 boosts the voltage of the DC power supplied from the DC overhead wire 80 and outputs the DC power. The first filter capacitor 24 removes ripple components from the boosted DC power and outputs the DC power to the high-frequency inverter 26. The high-frequency inverter 26 converts the DC power into high-frequency AC power, and outputs the AC power to the high-frequency transformer 14. The high-frequency transformer 14 transforms the voltage of the AC power with the electrically isolated primary winding 34 and secondary winding 36 for output to the rectifier 40. The rectifier 40 converts the AC power into DC power for output. The second filter capacitor 42 removes ripple components from the DC power output by the rectifier 40 and outputs the DC power. The three-phase inverter 46 converts the DC power with the ripple components filtered, into three-phase AC, and outputs the three-phase AC to the load 88.

While the current collector 82 is in contact with the DC overhead wire 80 and supplied with power from the DC overhead wire 80, the contact-loss compensation capacitor 54 of the compensator 44 is charged with the DC power supplied from the rectifier 40 through the charging resistor 50.

By contrast, while the current collector 82 is separated and supplied with no power from the DC overhead wire 80, the contact-loss compensation capacitor 54 of the compensator 44 outputs the charged power to the three-phase inverter 46 through the discharge diode 52.

As described above, the electrostatic capacity of the second filter capacitor 42 is smaller than the electrostatic capacity of the contact-loss compensation capacitor 54. Thus, the power conversion device 10 can lower a rush charging current into the second filter capacitor 42 at the time of initial charging and reconnection after disconnection, and can thus exclude a resistor connected in series to the second filter capacitor 42. Thereby, the power conversion device 10 can be simplified in configuration and structure. Moreover, due to the serial connection of the charging resistor 50 to the contact-loss compensation capacitor 54 with large electrostatic capacity, the power conversion device 10 can reduce a rush charging current into the contact-loss compensation capacitor 54. As a result, the power conversion device 10 can be simplified in configuration and structure without a resistor and a contactor, which would otherwise be disposed in the primary circuit 12 in order to reduce a rush charging current into both the filter capacitor and the compensation capacitor.

In the power conversion device 10, the charging resistor 50 is connected in series to the contact-loss compensation capacitor 54. Thus, the second filter capacitor 42 absorbs most of the ripple components, so that the contact-loss compensation capacitor 54 hardly receives ripple components. Because of this, the power conversion device 10 can inhibit deterioration of the contact-loss compensation capacitor 54 and prolong the longevity thereof. Thereby, the power conversion device 10 can adopt an electrolytic capacitor having a shorter longevity but being smaller in size and lighter in weight for the contact-loss compensation capacitor 54. As a result, the power conversion device 10 can be decreased in size and weight.

In the power conversion device 10, the boosting chopper 22 can remove low-frequency ripple components from the DC power, which leads to reducing the electrostatic capacity of the first filter capacitor 24 to as small as around 100 µF, for example. In the power conversion device 10, the electrostatic capacity of the first filter capacitor 24 can be further reduced by increasing the switching frequency of the switching element 32 of the boosting chopper 22.

In the power conversion device 10, the frequency of the AC power output by the high-frequency inverter 26 is set to higher than the frequency of a commercial power source, for example. Thus, in the power conversion device 10, the electrostatic capacity of the second filter capacitor 42 in the secondary circuit 16 can be decreased to as small as around 100 µF, for example. In addition, according to the power conversion device 10, the high-frequency transformer 14 can be reduced in size and weight.

### <Second Embodiment>

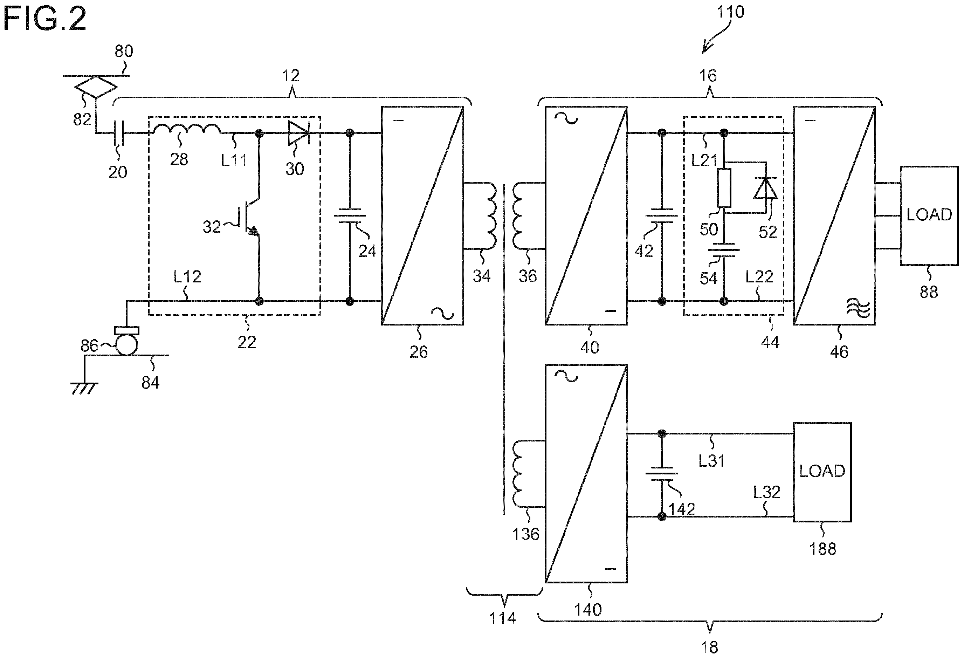

FIG. 2 is a block diagram of a power conversion device 110 according to a second embodiment. As illustrated in FIG. 2, the power conversion device 110 of the second embodiment includes the primary circuit 12, a high-frequency transformer 114, the secondary circuit 16, and a tertiary circuit 18.

The high-frequency transformer 114 further includes a third winding 136. The third winding 136 is connected to the tertiary circuit 18. The third winding 136 is electrically isolated from the primary winding 34 and the secondary winding 36. The third winding 136 receives AC power from the primary winding 34. The high-frequency transformer 114 converts the voltage of the AC power at a boosting ratio corresponding to the winding ratio of the primary winding 34 and the third winding 136, and outputs the resultant AC power to the tertiary circuit 18.

The tertiary circuit 18 functions as a DC power source that outputs DC power. The tertiary circuit 18 includes a second rectifier 140, and a third filter capacitor 142 that is an example of the third capacitor. The tertiary circuit 18 includes one wiring L31 (e.g., wiring on the positive electrode side) and the other wiring L32 (e.g., wiring on the negative electrode side) from the second rectifier 140 to a load 188.

The second rectifier 140 is connected in a stage following the third winding 136. The second rectifier 140 receives and converts the AC power from the third winding 136 into DC power with a low voltage (e.g., 100 V) and outputs the DC power to the load 188.

The third filter capacitor 142 is connected in a stage following the second rectifier 140. The third filter capacitor 142 is connected between the wiring L31 and the wiring L32. The third filter capacitor 142 removes ripple components from the DC power output by the second rectifier 140.

In the power conversion device 110 of the second embodiment, the high-frequency transformer 114 includes three windings, thereby enabling parallel connection between the secondary circuit 16 and the tertiary circuit 18. Electric vehicles include, as an auxiliary power source, a three-phase AC power source (e.g., 440 V) for supplying power to the air conditioner and the motor-driven air compressor, as described in the first embodiment, and a DC power source (e.g., 100 V) for supplying power to a control device that controls an electric vehicle. The DC power source typically includes a rectifier in a stage following the three-phase AC power source through a transformer, and a battery to continuously supply power to the control device. That is, the DC power source does not require contact-loss compensation. By connecting the secondary circuit being the three-phase AC power source to the secondary winding of the high-frequency transformer and connecting the tertiary circuit being the DC power source to the third winding of the high-frequency transformer, the power conversion capacity of the secondary circuit 16 can be reduced, as compared with the DC power source formed of a circuit branched from the stage following the compensator 44 of the secondary circuit 16. Thereby, the power conversion device 110 can reduce the electrostatic capacity of the contact-loss compensation capacitor 54 in the secondary circuit 16.

The tertiary circuit 18 functions as a low-voltage DC power source, and does not require a compensator. Thus, the power conversion device 110, although it additionally includes the tertiary circuit 18, can be prevented from structural complication and enlargement.

The arrangement, the connection relations, and the numbers of the elements of the above-described embodiments may be changed appropriately. The embodiments may be combined.

For example, although the above embodiments have described the second filter capacitor 42 being an electrolytic capacitor, the second filter capacitor 42 may be an oil capacitor, a film capacitor, or the like.

While certain embodiments have been described, these embodiments have been presented by way of example, and are not intended to limit the scope of the invention. These novel embodiments may be embodied in a variety of other forms; furthermore, various omissions, substitutions and changes may be made without departing from the spirit of the invention. Such embodiments and modifications would fall within the scope and spirit of the invention, and would fall within the invention described in the claims and their equivalents.

## Claims

1. A power conversion device, comprising:
a primary circuit that converts DC power into AC power and outputs the AC power;
a secondary circuit that converts AC power into DC power; and
a transformer that electrically isolates the primary circuit and the secondary circuit, transforms a voltage of the AC power output by the primary circuit, and outputs the resultant AC power to the secondary circuit, wherein
the secondary circuit comprises
a first capacitor that removes ripple components of the DC power converted from the AC power,
a second capacitor that has larger electrostatic capacity than the first capacitor, is connected in parallel to the first capacitor, and is charged with the DC power converted from the AC power,
a resistor that is connected in series to the second capacitor, and
a diode that is connected in series to the second capacitor and in parallel to the resistor, and discharges the power charged by the second capacitor.

2. The power conversion device according to claim 1, wherein the second capacitor is an electrolytic capacitor.

3. The power conversion device according to claim 1 or 2, wherein the electrostatic capacity of the second capacitor is ten times or larger than electrostatic capacity of the first capacitor.

4. The power conversion device according to any one of claims 1 to 3, wherein
the primary circuit comprises
a booster that boosts the DC power,
a filter that removes ripple components from the DC power boosted by the booster, and
an inverter that converts the DC power with the ripple components removed into AC power and outputs the AC power to the transformer, and
the secondary circuit comprises
a rectifier that converts the AC power transformed by the transformer into the DC power and outputs the DC power to the first capacitor.

5. The power conversion device according to claim 4, wherein resistance between the rectifier and the first capacitor is smaller than resistance of the resistor.

6. The power conversion device according to claim 4 or 5, wherein the secondary circuit further comprises a second inverter that converts the DC power output by the rectifier into AC power with a lower frequency than a frequency of the AC power output by the inverter.

7. The power conversion device according to any one of claims 1 to 6, wherein
the transformer comprises
a primary winding that is connected to the primary circuit,
a second winding that is connected to the secondary circuit and receives the AC power from the primary winding, and
a third winding that is electrically isolated from the primary winding and the secondary winding and receives the AC power from the primary winding, and
the power conversion device further comprises
a tertiary circuit comprising a second rectifier and a third capacitor, the second rectifier that converts the AC power received by the third winding into DC power and outputting the DC power to a load, the third capacitor that removes ripple components from the DC power output by the second rectifier.
